# EUROPEAN PATENT SPECIFICATION

(11) **EP 2 243 541 B1**
(45) Date of publication and mention of the grant of the patent: **05.12.2012**
(21) Application number: 10172659.4
(22) Date of filing: 07.09.2007
(51) Int. Cl.: B01D 53/86, B64D 13/00, B01J 35/06, B01J 23/34, B01J 23/50, B01J 23/68, B01J 35/04

(54) **Sytem for aircraft air treatment comprising an ozone conversion means**
Vorrichtung zur Luftbehandlung in Flugzeugen umfassend einer umwandlung von Ozon
Dispositif de traitement de l'air d'un avion comprenant un dispositif de transformation d'ozone

(30) Priority: 08.09.2006 US 842916 P; 08.09.2006 EP 06120347
(43) Date of publication of application: 27.10.2010
(62) Divisional of application: 07808572.7
(73) Proprietor: Parker Hannifin Manufacturing Netherlands (Filtration and Separation) B.V., 4878 AA Etten-Leur (NL)
(72) Inventor: Leenders, Paulus Hendrikus Maria, 6536 GL, Nijmegen (NL); Roks, Martinus Franciscus Maria, 5091 BZ, Middelbeers (NL); Rathfelder, Robert William, Trabuco Canyon, CA 92679 (US); Ault, Brian Andrew, Ivrine, CA 92614 (US); van Oers, Jacobus Petrus Cornelis Maria, 4715 EE, Rucphen (NL)
(74) Representative: Swinkels, Bart Willem

(56) References cited:
- EP-A1- 0 298 531
- EP-A2- 1 273 515
- WO-A-2005/097303
- WO-A-2006/015858
- US-A- 4 871 709
- US-A- 5 620 672
- US-A1- 2006 062 704

## Description

### FIELD OF THE INVENTION

The invention pertains to an ozone conversion means and the use thereof in air management in aircrafts, for cabin conditioning and/or inerting fuel tanks. The invention also pertains to a gas separation unit comprising an ozone conversion means and a hollow fiber membrane suitable for selective removal of oxygen from a fuel tank ullage.

### BACKGROUND OF THE INVENTION

Commercial aircrafts feed bleed air from a gas turbine engine to an environmental control system (ECS), in which the air is treated to obtain cabin air quality for the comfort of flight crew and passengers. Therein, ozone converters are deemed necessary to bring the ozone concentration in cabin or flight down from the relatively high atmospheric ozone content at flight altitude to a time weighted average of 0.1 ppm, the upper limit permitted by FAA regulations.

Conventional ozone converters typically work at high temperature to break down ozone concentrations to acceptable levels. US 5,620,672 illustrates this particularly well for a layered ozone catalyst. Overall, sufficient ozone conversion is only achieved at higher temperatures and long residence times.

For that reason, these catalytic ozone converters are always located near the bleed ports, making use of the high bleed air temperature of typically more than 200 °C. After ozone breakdown, the treated air will be cooled for conditioning it to the passenger cabin.

In addition, the same engine bleed air or pressurised air is nowadays used in fuel tank inerting systems, often referred to as Onboard Inert Gas Generating System (OBIGGS). These fuel tank inerting systems are the answer to a recent number of accidents that occurred as the result of unknown ignition sources within an aircraft fuel tank, despite all foregoing attempts to prevent fuel tank explosions by precluding possible ignition sources within fuel tanks. With hollow fiber membrane technology it has been shown to be possible to create an oxygen-poor atmosphere in the fuel tank ullage, thus eliminating another important factor in the fire triangle. US-A-2005/173017 discloses such an inerting system for an aircraft including an air source incorporating an air separation module. Engine bleed air or pressurised air from another source is supplied to the air separation module.

Most conventional gas separation membranes have an optimum performance at temperatures far lower than the bleed air temperature, and have a limited life time due to the intolerance of the membranes to the high ozone activities reported at high altitude. Hence, like ECS, OBIGGS also demands for ozone reduction, and applies the same high-temperature ozone converters. US-A-2005/173017 attempts to improve life and reliability of the air separation modules by positioning these modules after ozone conversion means and pre-coolers or heat exchangers already implemented in the aircraft for the foregoing reasons related to ECS. Disadvantageously, at ozone concentrations of 0.1 ppm the life-time of an air separation module remains far behind the 30,000 average flight hours strived after by the industry.

However, periodic maintenance is disadvantageously required for typical high-temperature ozone converters today, due to the accumulation of contaminants, i.e. lubricants and volatile organic compounds (VOC), from the bleed air stream on the catalyst surfaces. The existing filters cannot protect the ozone converters, since these do not tolerate high temperature, and are thus located downstream from the heat exchanger, and therefore downstream from the ozone converter as well.

Further, there is ongoing research aimed at reducing the quantity of engine bleed air used for various purposes around the aircraft, possibly switching towards a more electric airplane. ECS and OBIGGS would then need to be fed by other air sources, for instance low temperature air from outside the aircraft. Heat exchangers would still be required for conditioning the air to the passenger cabin and to the air separation module, but now for warming up the air. Disadvantageously, with high-temperature ozone converting technology, such a preconditioning phase would first require a heat treatment to reach the high temperature required to achieve satisfactory ozone breakdown efficiency, and a subsequent cooling step again.

WO-A-2006/015858 discloses the passing of cooled process air, preferably bleed air, over an air separation module. It is recognized therein that OBIGGS requires ozone-free process air, in order to avoid damaging of the air separation module. Thereto, WO-A-2006/015858 suggests to filter the process air from ozone either before or after cooling. However, the publication lacks any detail on ozone catalysis, let alone does it teach the skilled person how to achieve sufficient ozone conversion at low temperatures.

For ECS, WO-A-2005/097303 at least partially addressed the problem of high-temperature ozone conversion, and attempted to solve it. Thereto, it uses an ozone removal system comprising a first catalytic composition comprising Ag or AgO, working in a temperature range of 100 - 300 °F (38 - 149 °C), and a palladium-based second catalytic composition located downstream there from, having a working temperature range of 300 - 500 °F (149 - 260 °C). It claims that the combined catalyst has an effectiveness which makes it possible to reduce the ozone levels in either engine bleed air or air derived from a dedicated ambient air compressor 20 fold, to 0.1 ppm or less, as presently required by the FAA. WO-A-2005/097303 teaches to avoid transition metals such as Mn, bases its catalyst on a support of 10 - 100 µm thickness, and in an amount of 1000 - 5000 g/ft³ of substrate.

Focusing on the low-temperature ozone catalyst of WO-A-2005/097303, it was found by the inventors that ozone conversion stays behind at higher flow rates. In order to make up for that, space-consuming amounts of the catalyst are required. Above all, the durability of the ozone catalyst was also limited, as demonstrated in the accompanying examples.

Moreover, in the near future it is very well possible that the upper limit laid down by the FAA will be lowered, as ozone levels of 0.1 ppm are still regarded as being detrimental to the health of human beings over longer exposure intervals. It is questionable whether lower ozone levels may within reach with the catalyst composition of WO-A-2005/097303, based on conventional supports. It would again require large amounts of catalyst to compensate.

Hence, there is a need for low-temperature ozone converters which may be applied as an alternative to the high-temperature existing ozone converters in the aircraft industry, and which may be better protected from any contamination, and which have a high ozone conversion efficiency, thus requiring only minimal amounts There is also a need for an ozone conversion means which would enable a skilled person to switch to other sources of air for cabin conditioning or fuel tank inerting, in particular low temperature air sources, thereby keeping the need for heat exchange to a minimum. Further, there is a need for ozone converters having high ozone conversion efficiency, which may extend the life time of an air separation module suitable in OBIGGS to more than 30,000 average flight hours. Then there is also a continuous need in the aircraft industry to minimise weight, size and complexity, and the urge to facilitate access for maintenance and decrease direct maintenance costs.

Without any reference to aircraft industry, US 4,871,709 discloses an ozone cracking catalyst which comprises active manganese oxide, preferably comprising α-MnO_{2,} particularly amorphous manganese oxide. EP 298.531 discloses a gas separation comprising a hollow fiber membrane formed from polyphenylene oxide (PPO).

### SUMMARY OF THE INVENTION

It is a first object of the invention to provide a system having an air separation module and a low-temperature ozone conversion means which is suitable for use in cabin conditioning and/or inerting fuel tanks, has low maintenance costs, high durability and high ozone conversion efficiency, and reduces the required amount of heat exchange in current bleed air-based and future low-temperature air source applications.

It is a second object to provide a system having an air separation module and an ozone conversion means which improves the durability and reliability of any subsequently installed equipment, more in particular an air separation module suitable in fuel tank inerting systems by reducing the ozone concentrations to average levels below 0.05 ppm, preferably even below 0.02 ppm, either alone or in combination with existing aircraft ozone converters.

It is a third object of the invention to provide a fuel tank inerting device which protects vehicle fuel tanks form explosion hazards by maintaining the oxygen concentration in the fuel tank ullage continuously at a safe level, preferably 9 vol% or less, with high durability, preferably for at least 30,000 average flight hours without any intermediate maintenance or even replacement, but which, if deemed necessary, is easy to install and remove, with minimal installation costs and weight impact.

It is a fourth object of the invention to provide a system of an air separation module and an ozone conversion device in a single, integrated package, in order to simplify the assembly, installation, maintenance and replacement of similar but separate devices presently employed in fuel tank inerting systems.

It was found that the aforementioned drawbacks are solved and the above objects are reached to some extent if a special low-temperature ozone converter is applied, based on manganese oxide, particularly of the amorphous type. Ozone conversion efficiency was greatly improved over that of a silver-based catalyst of WO-A-2005/097303. Evidence is provided in the accompanying examples.

Both the carrier structure and the special catalyst configuration are described below.

### DETAILED DESCRIPTION OF THE INVENTION

Thus, in a first aspect the invention pertains to a system suitable for cabin conditioning and/or inerting fuel tanks in aircraft, said system having an air separation module and a low-temperature ozone conversion means having no pre-coolers or heat exchange units in-between, wherein said ozone conversion means contains an ozone cracking catalyst comprising active manganese oxide, with a loading of more than 20 g/l manganese oxide calculated in terms of Mn, said ozone conversion means having an ozone conversion efficiency of more than 90 % at a temperature lower than 120 °C, and wherein said air separation module comprises a selectively permeable hollow fiber membrane that discriminates between oxygen and inert gases low-temperature ozone conversion means containing an ozone catalyst composition in cabin conditioning and/or inerting fuel tanks.

"Low temperature ozone conversion means" means those converters and catalysts which have an ozone conversion efficiency of more than 90 %, preferably even more than 95 %, most preferably more than 97 % at a temperature lower than 120 °C, preferably at a temperature in the range of 20 - 100 °C, more preferably between 40 - 90 °C.

In another aspect, the invention pertains to the use of the above system in aircraft air management, and to aircraft cabin air management or an Onboard Inert Gas Generating System (OBIGGS) for inerting fuel tanks, comprising the above system.

### Preferred catalyst composition

The ozone conversion means is preferably an ozone cracking catalyst as described in GB 2.208.207 and US 4,871,709. The ozone cracking catalyst comprises active manganese oxide, preferably comprising α-MnO₂, particularly amorphous manganese oxide.

The ozone cracking catalysts containing amorphous manganese oxide taught in the aforementioned patent publications show high ozone cracking efficiency at less than 120 °C, specifically at 25 - 100 °C.

These ozone catalysts convert ozone into oxygen at room temperature, and are now in use in copy machines, laser beam printers, UV lamps, electron beams, ozone deodorisers, bactericidal/sterilisation equipment, film surface processors, ozone water treatment systems and ozone semi-conductor processors. However, at present, there is no incentive for a person skilled in the aircraft industry, especially in the field of air management control therein, that would lead him towards the use of these room temperature honeycomb-supported ozone cracking catalysts in aircraft environment air control systems. In fact, WO-A-2005/097303 teaches away there from, associating transition metals such as Mn with contamination. Based thereon, a skilled person would find no reason to switch to manganese oxide catalysts.

The preferred ozone catalyst of the invention may have one or more of the following features.

The preferred ozone cracking catalysts comprise heavy γ-MnO₂ having 0.2 - 0.5 cm³/g pore volume, at least 80 m²/g specific surface area and 0.7-2.0 cm²/g specific volume.

The ozone cracking catalyst of the invention preferably contains amorphous manganese oxide, shown as MnOₓ (x about 1.8 - 2.0), having an average micropore diameter of 400-800 nm, BET specific surface area of more than 200 m²/g, preferably 220 - 300 m²/g. Especially preferred are those which do not show a particular diffraction peak in the range of diffraction angle 2Θ 20 - 80 ° in an X-ray diffraction pattern.

### Support

The catalyst composition of the invention may be aggregated on a support which may have a polymeric structure comprising e.g. poly(phenylene oxide), in different shapes e.g. (hollow) fibers or polymer foam. Alternatively, the support may have a textile structure e.g. carbon cloth.

Additionally, it is found that the low-temperature ozone catalyst of the invention exhibits enhanced ozone cracking efficiency if supported by a particular honeycomb structure. Such a honeycomb structure, prepared by laminating a plate-like sheet with a wave-like sheet, has the advantage over other shapes in that it reduces the pressure loss during operation and is suitable for treating a large amount of gas.

A honeycomb structure in itself may not be special. However, it was found that the method for preparing the catalyst composition on a honeycomb structure has a predominant effect on the ozone cracking efficiency, and only if the method for preparing the catalyst as taught in GB 2.208.207 and US 4,871,709 is applied, an advantageous uniform distribution of catalyst is obtained.

The honeycomb structure comprises a monolithic body having a plurality of fine, parallel gas flow channels extending therethrough. Honeycle, manufactured by Nichias Corporation is a good example of a suitable honeycomb structure carrier. It preferably comprises ia sheet-like aggregate of fibers, preferably ceramic fibers, having a void percentage of more than 75% and an apparent bulk density (hereinafter referred to as ABD of less than 0.4, preferably 0.28 - 0.35.

In principle, a carbon structure may be applied. Preferentially, the substrates may be extruded from ceramic-like compositions such as alpha-alumina, cordierite or mullite, or other similar highly refractory materials. These type of catalyst supports are discussed in great detail, albeit in relation to deodorising catalytic material, in EP-A-909.583 and EP-A-1.142.635.

The present invention preferably employs an aggregate of ceramic fibers as a carrier, examples of which are disclosed in Japanese Patent Publication No. 59-15028. Said aggregate of ceramic fibers is preferably a sheet-like aggregate of ceramic fibers selected from zirconia fibers, aluminosilicate fibers, alumina fibers, and silica fibers, preferably bonded with each other by a silicic acid gel. Other preferred catalyst carriers are metal, cordierite or mullite honeycomb structures, preferably with 0.01 - 0.2 mm thickness. Aluminum, titanium, or alloys thereof, or stainless steel are preferably used as metal. Titanium material is one of the preferred carriers, since it is light in weight and has high corrosion resistance. Hence, a catalyst foamed with the catalyst composition on a titanium carrier is particularly useful in the aircraft industry.

The wall of the fiber aggregate is characterized by having vacant pores of larger than 500 nm in diameter and being composed of spaces between fibers in an amount of more than 0.1 cm³/g, preferably more than 0.2 cm³/g.

In a preferred embodiment the ozone cracking catalyst is supported by a honeycomb structure comprising fiber aggregates, preferably ceramic fiber aggregates, such as to provide more than 0.02 cm³/g, more preferably 0.05 - 0.15 cm³/g of micropores of 10 - 200 nm in diameter, wherein the fiber aggregate is being composed of walls having vacant pores larger than 500 nm in diameter and in an amount of more than 0.1 cm³/g, more preferably more than 0.2 cm³/g, most preferably 0.5 - 1.0 cm³/g. The active catalyst composition comprises, manganese oxide and, is present on the fiber aggregate in an amount of more than 20 g/l, preferably 70 - 200 g/l, calculated on the basis of Mn. The fiber aggregate preferably has a honeycomb structure comprising sheet-like aggregates of fiber. It preferably has a BET specific surface area of 200 - 300 m²/g, and a micropore volume of 0.2 - 0.5 cm³/g. The average micropore diameter is about 510 - 530 nm. Such honeycomb structure has a low pressure drop, is light weighted, has a high corrosion resistance, and the honeycomb-supported catalyst has a high ozone conversion efficiency and is suitable for treating large amounts of gas.

The method for preparing the catalyst carrying catalytic microparticles is described in detail in US 4,871,709.

In summary, the method involves dipping the afore-described honeycomb structure carrier in an aqueous solution of manganese nitrate [Mn(NO₃)_{z.} 6H₂O] having a concentration of 10 - 18% by weight (calculated on the basis of Mn). The dipped honeycomb structure carrier is then removed from the solution, and an excess amount of the solution is blown off from the carrier by air, thus leaving manganese nitrate on the carrier in an amount of more than 20 g/l, preferably 20 - 90 g/l. The carrier containing manganese nitrate is then maintained in an ammonia gas stream of a high concentration at 20 - 40 °C for more than 2 hours, thereby neutralizing and aging the manganese nitrate to convert the manganese nitrate into manganese hydroxide. The concentration of the ammonia gas used is at least 10% or more, preferably higher than 40%, and the linear velocity (L) of the ammonia gas stream passing through the catalyst is preferably higher than 0.25 m/s.

The catalyst thus obtained is dried in air at a temperature of 130 - 150 °C, and the dried catalyst is thereafter calcined in air at a temperature of 300 °C for 2 hours, thus obtaining the desired catalyst containing active manganese oxide, particularly of the amorphous type.

If the catalyst composition is to be of the crystalline type, the ammonia gas treatment may be replaced by a heat treatment, to remove residual water and the water of crystallization by drying, and the dried catalyst is thereafter calcined at a temperature of 200 - 400 °C, to thermally decompose manganese nitrate into manganese oxide.

Obviously, modifications will readily occur to the skilled person, without departing from the invention. It was found that the above method for carrying an active catalyst component on a carrier results in a uniform distribution, without blocking and without substantially reducing the surface area of the carrier in comparison with that of the conventional carrying methods.

To carry aforementioned manganese oxide on a metal honeycomb, inorganic binder, such as silica sol and alumina sol, or organic binder may be used in the afore-described method. Water-soluble resins such as water soluble alkyd resin, epoxy resin, aqueous acryl resin, aqueous urethane resin or aqueous acryl-urethane resin are effective to restrict breakage or abruption of catalyst layers. In order to improve adhesiveness of the catalyst layer and metal surface, it is preferred to foam a catalyst layer on a resin layer by thermosetting or thermocondensating the resin, or coat the metal surface with the slurry containing the catalyst mixed with such resins. An example of a thermosetable resin is acrylic-urea resin, and examples of thermo-condensatable resins are alkyd resin (such as melamine alkyd resin) and epoxy resin (such as epoxy-phenol resin, epoxy urea resin).

It is observed by the Applicant that ozone cracking catalysts that work particularly well are those commercially available by Nikki-Universal Co. Ltd., for instance the NHC series catalysts.

With the ozone conversion means of the invention it is possible to treat air having high ozone concentrations, to reduce the ozone concentration of it to below 0.05 ppm, more in particular below 0.02 ppm.

### Applications

The invention also pertains to an Environmental Control System (ECS) for aircraft cabin air management, wherein air having a temperature below 120 °C, most preferably below 100 °C is passed through a system comprising the ozone conversion means according to the invention, and to an Onboard Inert Gas Generating System (OBIGGS) for inerting fuel tanks, wherein air is passed through an ozone conversion means containing an ozone catalyst composition supported on a honeycomb structure, and wherein the ozone-treated air is passed through a hollow fiber membrane, for removing at least a part of the oxygen present in the ozone-treated air.

The air may be bleed air provided by the engine turbines or pressurised air from another source. Alternatively, the air provided to the OBIGGS may be air provided by the ECS, referred to as cabin air. It may also be possible to replace at least part of the bleed air provided to OBIGGS and/or ECS by low temperature air, preferably below 120 °C, most preferably lower than 100 °C, for instance ram air or another low-temperature air source from in- or outside the aircraft.

The ECS and/or OBIGGS containing the system comprising the ozone conversion means according to the invention reduce the ozone concentrations to below 0.05 ppm, more preferably below 0.02 ppm at the outlet, and at a temperature lower than 120 °C, preferably at a temperature lower than 100 °C, if measured in accordance with the method given in United States Department of Transportation report no. DOT-P-15-89-5, Airliner Cabin Environment: Contaminant Measurements, Health Risks and Mitigation Options, December 1989.

The ozone conversion means of the invention can replace the existing ozone converters, or may be applied in series therewith. It is even possible to reduce the ozone outlet concentration even further than the aforementioned limits, depending on the inlet concentration, the number of ozone converter disks applied in series, and further optimisation of working temperature and catalyst concentration.

### VOC conversion

It is now observed that the efficiency of the ozone conversion means, especially its durability, and - associated therewith - the life time of any subsequent aircraft equipment, in particular air separation modules, may be further improved by filtering hydrocarbon vapour, lubricants and other solid particle pollutants from the air before it is provided to the ozone conversion means.

If the above ozone converters are preceded by a filter, accumulation of contamination on the catalyst is reduced or even avoided, therewith extending the effectiveness of the ozone converter over a longer period of time.

It is especially preferred to use a VOC conversion means in series with the ozone conversion means in case the air source is bleed air and/or the air separation module should have an extended life time of 30,000 average flight hours. For obvious reasons, the VOC conversion means is located upstream from the ozone conversion means. Alternatively, the VOC catalyst composition may be present on top of the same or a different honeycomb structure of the ozone conversion means holding the ozone catalyst composition.

The use of filters for removing VOC in the aircraft industry is known. However, like existing ozone conversion technology, these function appropriately at high temperature, preferably 150 - 200 °C. It is now found that VOC conversion means having better efficiency may be applied. An example thereof may be the VOC converted on a catalyst energized by low temperature plasma as described in JP-A-11-319486. Another suitable VOC conversion means may be a catalyst from the NH series as obtained from Nikki Universal Co. Ltd.. Even more preferably, the VOC conversion means may be applied at low temperature, wherein "low temperature" has the meaning as defined above in relation to the ozone conversion means.

### OBIGGS

If the ozone conversion means is applied in OBIGGS, it is immediately succeeded by a hollow fiber membrane involved in gas separation treatment, having no pre-coolers or heat exchange units in between. More conveniently, the ozone conversion means and the hollow fiber membrane may be integrated in a single housing, optionally further containing VOC conversion means, in order to minimise weight, size and complexity, and facilitate access for maintenance.

Therefore, the invention pertains to a gas separation unit suitable for generating inert gas, preferably nitrogen-enriched air, on a vehicle having a fuel tank, preferably an aircraft, which unit contains the ozone conversion means of the invention, and a gas separation means suitable for selective removal of oxygen, located downstream from the ozone conversion means, and wherein the unit has no means for heating or cooling. The OBIGGS gas separation unit of the invention is a lightweight, reliable design that is practical to retrofit within an aircraft. The gas separation means may be ceramic-based. The gas separation means is a hollow fiber membrane.

In the context of the invention, wherein the focus is on the removal of oxygen from air, "air separation" and "gas separation" are considered interchangeable.

The gas separation means comprises selectively permeable membranes that discriminate between oxygen and inert gases, most preferably nitrogen. By being more permeable to oxygen than to nitrogen, the membrane may be used to separate oxygen from an air stream (i.e. the bleed air) of approximately 79 vol% nitrogen and 21 vol% oxygen by flowing the air through such a membrane. The oxygen will pass through preferentially and may be recaptured on the other side of the membrane, while the nitrogen will pass through less preferentially, thus creating an oxygen-enriched airflow on the permeate side of the membrane and a nitrogen-enriched airflow on the retentate side. The ratio of permeabilities for both gases determines the efficiency of the membrane.

Preferably the gas permeable membrane is very thin to promote high gas flux. A non-uniform density profile or composite membrane structure is preferred. In a non-uniform density profile membrane the body of the membrane contains pores of voids such that the density of the structure varies with distance from one side of the membrane to the other in the transmembrane flux direction. The non-uniformity is preferably asymmetric in that the membrane has a dense skin on one side and incorporates voids increasing in concentration with distance from the other side. Such hollow fibers are manufactured by asymmetric solution spinning, which is a coextrusion-like process that allows "composite-like" fibers to be formed in a continuous process.

For a gas separation module to be selected for use in combination with the ozone conversion means of the invention and in fuel tank inerting systems in a vehicle, preferably an aircraft, the air separation module has to fulfil the following criteria: The gas separation membrane should have an oxygen/nitrogen selectivity of at least 3, at a temperature between 20 - 120 °C, more preferably below 100 °C.

Good results are obtained while employing a hollow fiber membrane formed from polyphenylene oxide (PPO) as prepared according to EP-A-298.531, built up from poly(2,6-dimethyl-p-phenylene oxide) or poly(2,6-dimethyl-1,4-phenylene oxide) having a high molecular weight, of the order of 10⁵ - 10⁶. The top layer has a thickness of less than 100 nm, more preferably less than 50 nm. These asymmetric hollow fibers can be assembled in bundles of 2 - 20,000 fibers in a module. These bundles of fibers are considered synonymous with gas separation membrane or hollow fiber membrane in the context of the invention. The large diameter of the fibres makes them far less vulnerable to damage from contamination or fluctuations in supply pressure.

The module preferably comprises an inlet for the gas mixture to be separated and two outlets, for the permeate on the one hand, and the retentate on the other hand. If desired, several modules may also be connected in series or in parallel with each other in order to obtain a still more optimum gas separation.

The gas separation unit reduces the explosion hazard of an aircraft fuel tank by providing a non-explosively combustible vapour above the liquid fuel tank, sometimes referred to as ullage washing. For the purpose of the invention, a tank is considered inert when the bulk average oxygen concentration within the compartments of the tank is 12 vol% or less at sea level. As fuel is consumed, the level of liquid fuel in the tank lowers and is replaced by the nitrogen-enriched air stream from treated, cooled bleed air or air from another pressurised source. The OBIGGS thus maintains the tanks at appropriate inerting levels during flight.

In an embodiment of the present invention the air separation unit further contains a VOC conversion means as described above.

The invention also relates to a method for inerting the fuel tank ullage of a vehicle, wherein the method involves providing air at a temperature in the range of 20 - 120 °C, preferably lower than 100 °C, more preferably even lower than 70 °C, through the aforementioned gas separation unit, to obtain a nitrogen-enriched airstream and an oxygen-enriched airstream, whereafter the nitrogen-enriched air is provided to the fuel tank.

Although the principle of fuel tank inerting may be applied to any vehicle having a fuel tank, the impact of potentially flammable and explosive fuel-vapour mixtures that exist in fuel tanks is of particular concern for aircraft applications. The vehicle may be a military or a commercial aircraft.

Presently, the OBIGGS use air from the engine(s) or from another pressurised air source, which air flow is first subjected to high-temperature ozone treatment, cooling, and filtration, respectively, before it is transferred to the gas separation unit. The OBIGGS of the invention is different in that it may now include i) an inlet for receiving an air stream from the engine or another pressurised air source; ii) a heat exchanger downstream from the inlet; iii) optionally a filter; and a system comprising (iv) a low-temperature ozone converter; and (v) an air separation membrane. In other words, the air flow is first subjected to heat exchange treatment and then to ozone treatment, optionally preceded by filtering, and gas separation. The heat exchange may be applied to heat or cool the air to be subjected to the ozone treatment, dependent on the choice of air source. A least steps (iv) and (v), and optionally also step (iii) are combined in a gas separation unit, which gas separation unit is located downstream from the heat exchanger and is suitable for providing with a nitrogen-enriched gas flow to a fuel tank. The filter now protects both the air separation membrane and the ozone converter, therewith increasing the efficiency of the ozone converter and extending the life time of the gas separation unit, thus reducing maintenance.

The gas separation unit of the invention advantageously enables the skilled person to use low-temperature air, such as cabin air or ram air, as the air source for nitrogen-enriched air, instead of the high-temperature polluted pressurised bleed air from the engines. Up to present, cabin and ram air have not been utilized as a reasonable alternative for bleed air, at least partly because of the requirement of high temperature in ozone removal. Hence, in a preferred embodiment the OBIGGS uses cabin air and/or ram air, most preferably cabin air, as the air source provided to the gas separation unit of the invention.

The fuel tank inerting system or OBIGGS incorporating the gas separation unit of the invention may be primarily located within an air conditioning pack bay, in adjacent wing fairing areas, or in other suitable areas of the aircraft. The gas separation unit may be implemented in the vicinity of one or more of the fuel tanks present on board, including center and wing fuel tanks. It will be capable of being adapted for various applications and OBIGGS known in the art, such as described in US-A-2005/0247197 and US-A-2005/0173017. These documents also teach the skilled person how to control the flow rates of nitrogen-enriched gas during the different stages of the flight. If the gas separation unit is implemented in existing fuel tank inerting systems using pressurised air for an air source, there is little reason to change any of the procedural steps known in the art. However, if an air source other than bleed air is selected, it is considered within the ambit of a skilled person to adapt the OBIGGS to the new air source. In fact, the OBIGGS will be a simplified version of its existing counterpart, as the differences in atmospheric conditions during climb, cruise and descent are already accounted for in the supply of cabin air.

In addition, it is also apparent that the gas separation unit of the invention could well be employed to inert a non-fuel tank environment such as a cargo hold, or to provide a fire suppression system for selected areas of the vehicle. Most preferably, the gas separation unit of the invention will simultaneously be adapted to provide a fire suppression system in other regions of the aircraft, such as a cargo hold.

### EXAMPLES

### Example 1 - ozone conversion means

A suitable ozone converter is the RIHO-05-0801 available from Nikki-Universal Co. Ltd. (Japan), Al₂O₃, SiO₂ and MnO₂ being the active ingredients.

The ozone converter and its preparation process is described in great detail in example 1 of GB-A-2.208.207 and US 4,871,709.

### Example 2a - Ozone catalyst efficiency

The ozone conversion rate of the ozone converter according to example 1 was determined at various temperatures and ozone concentrations, given an inlet flow of 60 m³/hr and an inlet pressure of 2.5 bar.

The ozone concentration at the inlet was varied from 0.05, 0.1, 0.3 to 1.5 ppm, and the ozone and air temperature was 50, 60, 70 and 80 °C. The experiments were performed with single ozone converters and series thereof.

The ozone conversion efficiency at the outlet of the ozone converter is summarised in table 1.

**Table 1: Ozone conversion efficiency at various temperatures**

| T (°C) | Single disk | Two disks in series |
|---|---|---|
| 50 | 97% | >99% |
| 60 | 97.6% | >99% |
| 70 | 98.9% | >99% |
| 80 | 99% | >99% |

### Example 2b - Ozone catalyst efficiency

In a closed environment of 15 1 an ozone concentration of about 1000 ppm was generated. Then, the air having a high ozone concentration was recirculated at room temperature over the ozone converter according to example 1, until an ozone concentration of less than 1 ppm was obtained.

The test was repeated with another ozone converter.

The results of the test are listed in table 2a and 2b for both respective catalysts, measured at different relative humidities. Therein, the shorter the time in which the ozone reduction was realised, the more efficient the ozone converter.

**Table 2: Ozone conversion efficiency at RT at different relative humidities (%RH)**

| | Time (s) at 45 %RH | Time (s) at 95 %RH |
|---|---|---|
| Ozone converter acc to example 1 | 41 - 51 | 82 - 92 |
| Ozone converter II | 323 - 385 | 1510 |

### Comparitive example I

The ozone conversion rate of the ozone converter according to example 1 was determined and compared with 2 converters prepared in accordance with the instructions given in US 4,871,709, having Ag/TiO₂ and AgO/TiO₂ as active ingredients at various temperatures, ozone concentrations and flow velocities, given an inlet pressure of 2.5 bar. For sake of completeness, it is mentioned that the size of the catalysts used here is much smaller than that of example 2, where flow rates of 60 m³/h were applied. Guidelines are available in the art to select the size to the stream to be treated (the so called GHSV value, which is the inverse of the residence time).

The silver-based ozone converters represent those disclosed in WO-A-2005/097303.

The ozone concentration at the inlet was varied from 0.02, 0.1 to 1.0 ppm, the flow velocity from 0.8, 5 to 10 m³/h, wherein the flow rates were normalized to STP standards, i.e. standard temperature and pressure: 0 °C and 1.013 bar absolute (1 atm). The ozone and air temperature was 25 and 60 °C. The experiments were performed with single ozone converters 22mm in diameter and 50mm in length. The cell density of the ozone converter, containing MnO₂ as active ingredient, according example 1a is 500 cpi² (cells per squared inch), whereas the cell density of the Ag and AgO containing samples is 800 cpi².

Blank experiments were performed with 10 ppb ozone inlet concentration at 60 °C and 0.8 m³/h; it showed a loss of ozone less than 0.5 ppb, and two more points at 25 °C and 0.8 m3/h with ozone inlet concentrations of 134.2 and 34.5 ppb, which resulted in outlet concentrations of 133 and 33.6 ppb, respectively. Hence, the loss of ozone is negligible.

The results were listed in table 3. Therein, the ozone conversion efficiency of the different samples at the outlet of the ozone converters was normalised for the cell density. The normalization was made by dividing conversion rate by the cell density of the sample multiplied with the cell density of the MnO₂ catalyst to get comparable values. Normalization was validated by sampling a Ag-catalyst at 500 cpi²; the ozone conversion corresponded to that of a normalized 800 cpi² sample.

The results clearly demonstrate a far better ozone conversion of the MnO₂ catalyst of the invention, at different flow rates, temperatures and inlet ozone concentrations.

**Table 3: Ozone conversion efficiency of various catalysts at various conditions**

| T | [O₃] | Volume flow | MnO₂ | Ag | AgO |
|---|---|---|---|---|---|
| (°C) | (ppm) | (m³/h) | (%) | (%) | (%) |
| 25 | 0.02 | 0.8 | 90.4 | 57.6 | 54.0 |
| " | " | 5 | 67.6 | 40.3 | 34.8 |
| " | " | 10 | 56.0 | 23.4 | 32.4 |
| | | | | | |
| " | 0.1 | 0.8 | 98.7 | 61.4 | 59.6 |
| " | " | 5 | 80.8 | 47.6 | 38.0 |
| " | " | 10 | 63.0 | 41.2 | 21.7 |
| | | | | | |
| " | 1.0 | 0.8 | 99.8 | 62.2 | 55.5 |
| " | " | 5 | 82.2 | 40.3 | 43.1 |
| " | " | 10 | 61.7 | 23.4 | 19.9 |
| | | | | | |
| 60 | 0.1 | 0.8 | 97.2 | 60.7 | 60.7 |
| " | " | 5 | 85.2 | 47.1 | 48.8 |
| " | " | 10 | 73.8 | 39.2 | 36.0 |

**Table 4: Ozone conversion efficiency of various catalysts**

| time | MnO₂ | Ag | AgO |
|---|---|---|---|
| (min) | (%) | (%) | (%) |
| 1200 | 95 | 48 | 38 |
| 1300 | 95 | 38 | 25 |

### Comparitive example II

The ozone conversion rate for MnO₂, Ag and AgO catalysts prepared in accordance with the instructions given in comparive example I was tested in time. In all cases, cell densities were about 500 cpi².

The test involved a pretreatment for 1200 min at an inlet concentration of ozone of 6 ppm, at 25 °C and 25 %RH. The flow rate was 72,000 1/hr. After this time period, the durability was tested by decreasing the ozone concentration to 0.5 ppm.

The results are shown in table 4, again clearly demonstrating the surprising effect of the catalyst of the invention. The pre-treatment (short period of time at high ozone levels) simulates a long history of ozone exposure that the ozone catalyst will face in aircraft industry. The history of the catalyst - in terms of ozone exposure - shows a dramatic effect on the silver-based catalysts, while the catalyst of the invention remains stable over time.

## Claims

1. A system suitable for cabin conditioning and/or inerting fuel tanks in aircraft, said system having an air separation module and a low-temperature ozone conversion means having no pre-coolers or heat exchange units in-between, wherein said ozone conversion means contains an ozone cracking catalyst comprising active manganese oxide, with a loading of more than 20 g/l manganese oxide calculated in terms of Mn, said ozone conversion means having an ozone conversion efficiency of more than 90 % at a temperature lower than 120 °C, and wherein said air separation module comprises a selectively permeable hollow fiber membrane that discriminates between oxygen and inert gases.

2. The system according to claim 1, wherein oxygen passes through the membrane and is recaptured on the other side of the membrane, thus creating an oxygen-enriched airflow on the permeate side of the membrane.

3. The system according to claim 1 or 2, being provided in a single, integrated package.

4. The system according to any one of the preceding claims, wherein said active manganese oxide comprises amorphous manganese oxide.

5. The system according to any one of the preceding claims, wherein said ozone catalyst composition is supported on a honeycomb structure comprising a sheet-like aggregate of fibers.

6. The system according to claim 5, wherein said honeycomb structure comprises a fiber aggregate such as to provide more than 0.02 cm³/g of micropores 10 - 200 nm in diameter, wherein said fiber aggregate is being composed of walls having vacant pores larger than 500 nm in diameter and in an amount of more than 0.1 cm³/g.

7. The system according to any one of the preceding claims, wherein said hollow fiber membrane is formed from poly(2,6-dimethyl-p-phenylene oxide) having a molecular weight of 10⁵ - 10⁶, and wherein the top layer of said membrane has a thickness of less than 100 nm.

8. Use of the system according to any one of the preceding claims in aircraft air management.

9. Use according to claim 8, for cabin conditioning.

10. Use according to claim 8, for inerting fuel tanks.

11. An Environmental Control System (ECS) for aircraft cabin air management or an Onboard Inert Gas Generating System (OBIGGS) for inerting fuel tanks, comprising the system according to any one of claims 1 - 7.

## Patentansprüche

1. System zur Kabinenklimatisierung und/oder Inertisierung von Treibstofftanks in Flugzeugen, wobei das System ein Luftseparationsmodul und eine Niedertemperatur- Ozonumwandlungseinrichtung ohne dazwischen geschaltete Vorkühler oder Wärmetauschereinheiten aufweist, wobei die Ozonumwandlungseinrichtung einen Ozonspaltungskatalysator enthält, der aktives Manganoxid mit einer Beladung von mehr als 20g/l Manganoxid, berechnet bezogen auf Mn, aufweist, wobei die Ozonumwandlungseinrichtung einen Ozonumwandlungswirkungsgrad von mehr als 90% bei einer Temperatur unterhalb von 120°C hat und das Luftseparationsmodul eine selektiv permeable Hohlfasermembran aufweist, die zwischen Sauerstoff und Inertgasen unterscheidet.

2. System nach Anspruch 1, wobei Sauerstoff durch die Membran hindurchgeht und an der anderen Seite der Membran wieder gewonnen wird, wodurch sich an der Permeatseite der Membran ein sauerstoffreicher Luftstrom ergibt.

3. System nach Anspruch 1 oder 2, bereitgestellt in einem einzigen integrierten Paket.

4. System nach einem der vorstehenden Ansprüche, wobei das aktive Manganoxid amorphes Manganoxid aufweist.

5. System nach einem der vorstehenden Ansprüche, wobei die Ozonkatalysatorzusammensetzung auf einer Bienenwabenstruktur, die ein flächiges Faseraggregat aufweist, getragen wird.

6. System nach Anspruch 5, wobei die Bienenwabenstruktur ein Faseraggregat aufweist, das mehr als 0,02cm³/g Mikroporen eines Durchmessers von 10-200nm bereitstellt, wobei das Faseraggregat aus Wänden besteht, die leere Poren eines Durchmessers von größer als 500nm und in einer Menge von mehr als 0,1cm³/g aufweisen.

7. System nach einem der vorstehenden Ansprüche, wobei die Hohlfasermembran aus Poly(2,6-dimethyl-p-phenylenoxid) eines Molekulargewichts von 10⁵_10⁶ hergestellt ist und die obere Schicht der Membran eine Dicke von weniger als 100nm hat.

8. Verwendung des Systems nach einem der vorstehenden Ansprüche im Flugzeugluftmanagement.

9. Verwendung nach Anspruch 8 für Kabinenklimatisierung.

10. Verwendung nach Anspruch 8 zum Inertisieren von Treibstofftanks.

11. Klimaanlage (ECS, Environmental Control System, Umgebungsluftsteuersystem) für Flugzeugkabinenluftmanagement oder bordeigenes Inertgaserzeugssystem (OBIGGS, Onboard Inert Gas Generating System) zum Inertisieren von Treibstofftanks, aufweisend das System nach einem der Ansprüche 1 bis 7.

## Revendications

1. Dispositif adapté pour la climatisation d'une cabine et/ou l'inertage de réservoir de carburant d'un avion, ledit dispositif ayant un module de séparation d'air et des moyens de conversion de l'ozone à basse température, sans élément de pré-refroidissement et sans unité intermédiaire d'échangeur de chaleur, lesdits moyens de conversion de l'ozone contenant un catalyseur de craquage d'ozone comprenant un oxyde de manganèse actif, avec une charge de plus de 20g/l d'oxyde de manganèse calculé en terme de Mn, lesdits moyen de conversion de l'ozone ayant une efficacité de conversion de l'ozone de plus de 90% à une température inférieure à 120°C, et dans lequel ledit module de séparation d'air comprend une membrane en fibre creuse sélectivement perméable qui sélectionne l'oxygène des gaz inertes.

2. Dispositif selon la revendication 1 dans lequel l'oxygène passe à travers la membrane et est recapturé de l'autre côté de la membrane, créant ainsi un courant d'air enrichi en oxygène du côté perméable de la membrane.

3. Dispositif selon les revendications 1 ou 2 fourni dans un ensemble unique et intégré.

4. Dispositif selon l'une des revendications précédentes dans lequel l'oxyde de manganèse actif comprend l'oxyde de manganèse amorphe.

5. Dispositif selon l'une des revendications précédentes dans lequel la composition de catalyseur de l'ozone est supportée par une structure en nid d'abeilles comprenant un agrégat de fibres en feuillet.

6. Dispositif selon la revendication 5 dans lequel la structure en nid d'abeilles comprend un agrégat de fibres de manière à obtenir plus de 0.02 cm³/g de micropores d'un diamètre de 10-200 nm, et dans lequel ledit agrégat de fibres est composé de parois ayant des pores vacants de plus de 500 nm de diamètre et en quantité de plus de 0.1 cm³/g.

7. Dispositif selon l'une des précédentes revendications dans lequel la membrane en fibre creuse est formée de poly (2,6-dimethyl-p-phenylene oxyde) ayant un poids moléculaire de 10⁵-10⁶, et dans lequel la couche supérieure de ladite membrane a une épaisseur inférieure à 100 nm.

8. Utilisation du système selon l'une des revendications précédentes pour le contrôle de l'air d'un l'avion.

9. Utilisation selon la revendication 8 pour la climatisation d'une cabine.

10. Utilisation selon la revendication 8 pour l'inertage de réservoir de carburant.

11. Système de contrôle de l'environnement (SCE) pour le contrôle de l'air d'une cabine d'avion ou système de génération d'azote embarqué (OBIGGS) pour l'inertage de réservoir de carburant comprenant le système selon l'une des revendications 1 à 7.
